# EUROPEAN PATENT APPLICATION

(11) **EP 3 572 642 A1**
(43) Date of publication of application: **27.11.2019**
(21) Application number: 19171079.7
(22) Date of filing: 25.04.2019
(51) Int. Cl.: F02C 7/047, F01D 25/02

(54) **SYSTEM AND METHOD TO PROMOTE EARLY AND DIFFERENTIAL ICE SHEDDING**

(30) Priority: 25.05.2018 US 201815989807
(71) Applicant: Rolls-Royce plc, London SW1E 6AT (GB); Rolls-Royce Corporation, Indianapolis IN 46225 (US)
(72) Inventor: Harvell, John, Derby, Derbyshire DE24 8BJ (GB); Jones, Geoffrey, Derby, Derbyshire DE24 8BJ (GB); Ward, Alistair, Derby, Derbyshire DE24 8BJ (GB)
(74) Representative: Rolls-Royce plc

(57) **Abstract**

A method for managing ice accretion on a gas turbine engine component comprises providing an ice management system (110) comprising a de-icing promoter (120) applied to only portions of a gas turbine engine component. The method further comprises operating the ice management system in icing conditions to promote the shedding of ice accreted on the gas turbine engine component on those portions where the de-icing promoter is applied. A gas turbine engine ice management system (110) and a gas turbine engine (100) including same are also described.

## Description

### BACKGROUND

During operation in icing conditions, gas turbine engine components may accrete significant amounts of ice. The accretion of ice may be of particular concern on engine components such as the spinner, inlet cowling, inlet guide vanes, and splitter assembly. In some cases, the shedding of accreted ice may result in an amount of ice that can be large enough to cause mechanical damage to downstream gas turbine components, cause compression system instabilities, or lead to combustion system flameout. Engine components in current turbofan engines such as the splitter assembly and spinner have no features for differentially de-icing. The surfaces of such components are generally symmetric about the engine axis and are susceptible to accretion of ice around the entire circumference of the component surface. When such large formations of accreted ice are shed, the amount of ice may cause the aforementioned problems as the ice is carried downstream within the engine. It is therefore desirable to shed ice from engine components in smaller amounts at any instant in time so that the downstream engine components (fans, compressors, combustors) are less likely to experience mechanical damage or operational instabilities (stall, surge, or flameout).

### SUMMARY

The present disclosure provides a method for managing ice accretion on gas turbine engine components, a gas turbine engine ice management system, and a gas turbine engine, as set out in the appended claims.

According to a first aspect of the present disclosure, a method is presented for managing ice accretion on a gas turbine engine component. The method comprises providing an ice management system comprising a de-icing promoter applied to only portions of a gas turbine engine component. The method further comprises operating the ice management system in icing conditions to promote the shedding of ice accreted on the gas turbine engine component on those portions where the de-icing promoter is applied.

In some embodiments, the de-icing promoter comprises a hydrophobic coating. In some embodiments, the de-icing promoter comprises electrical heating elements. In some embodiments, the de-icing promoter comprises a hot air system.

In some embodiments, the engine component is a rotating component and the de-icing promoter is provided in portions that are symmetric relative to the axis of rotation of the component. The rotating engine component may be a spinner, fan, or compressor blade.

In some embodiments, the engine component is a non-rotating component. The non-rotating engine component may be a splitter assembly, strut, core vane, or inlet lip. In such embodiments, the de-icing promoter may be provided in portions that are symmetric or asymmetric relative to the axis of rotation of the gas turbine engine.

According to a second aspect of the present disclosure, a gas turbine engine ice management system comprises a de-icing promoter configured to manage ice accretion on a selected engine component. The engine component comprises a surface member, which has portions with the de-icing promoter applied thereto and portions with no de-icing promoter applied thereto.

In some embodiments, the de-icing promoter comprises a hydrophobic coating. In some embodiments, de-icing promoter comprises electrical heating elements. In some embodiments, the de-icing promoter comprises a hot air system.

In some embodiments, the engine component is a rotating component and the de-icing promoter is applied to portions that are positioned symmetrically about the axis of rotation of the engine component. The rotating engine component may be a spinner, fan, or compressor blade.

In some embodiments, the engine component is a non-rotating component. The non-rotating engine component may be a splitter assembly, strut, core vane, or inlet lip. The de-icing promoter may be applied to portions that are symmetric relative to the axis of rotation of the gas turbine engine. The de-icing promoter may be applied to portions that are asymmetric relative to the axis of rotation of the gas turbine engine.

According to a third aspect of the present disclosure, a gas turbine engine comprises a gas turbine engine ice management system of the second aspect.

### BRIEF DESCRIPTION OF THE DRAWINGS

The following will be apparent from elements of the figures, which are provided for illustrative purposes.
**Fig. 1** is a side cutaway view of a gas turbine engine in accordance with one embodiment of the present disclosure.
**Fig. 2** is a front profile view of a gas turbine engine in accordance with one embodiment of the present disclosure.
**Fig. 3** is a schematic representation of a front profile view of a splitter assembly in accordance with one embodiment of the present disclosure.
**Fig. 4** is a flow chart of a method for managing ice accretion on a gas turbine engine component.

While the present disclosure is susceptible to various modifications and alternative forms, specific embodiments have been shown by way of example in the drawings and will be described in detail herein. It should be understood, however, that the present disclosure is not intended to be limited to the particular forms disclosed. Rather, the present disclosure is to cover all modifications, equivalents, and alternatives falling within the scope of the appended claims.

### DETAILED DESCRIPTION

For the purposes of promoting an understanding of the principles of the disclosure, reference will now be made to a number of illustrative embodiments in the drawings and specific language will be used to describe the same.

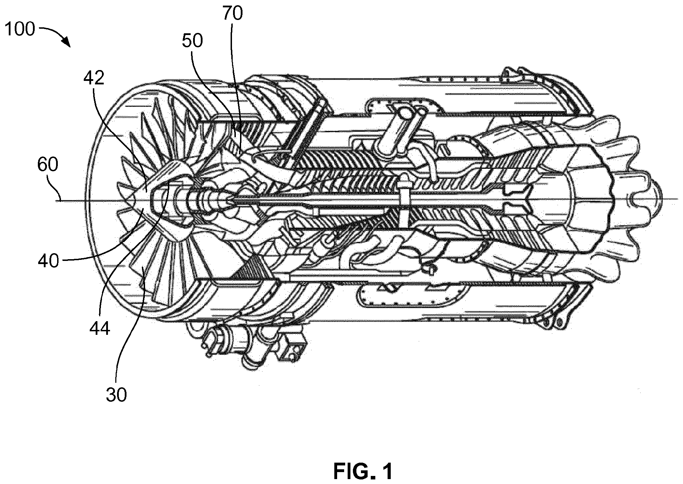

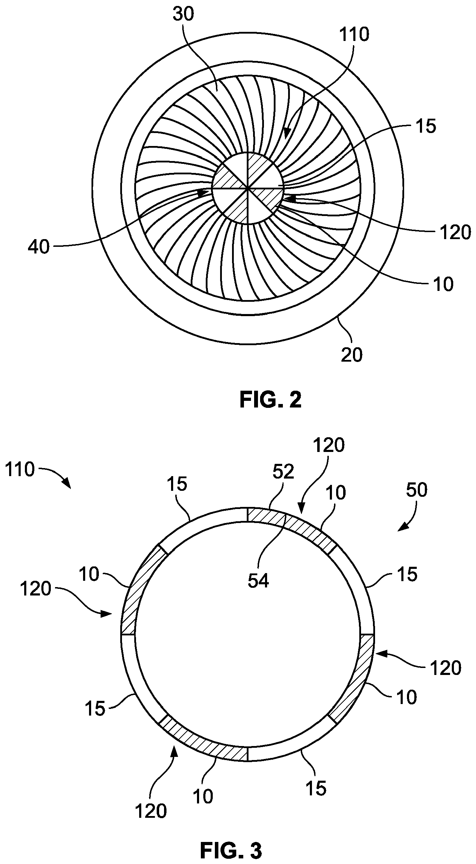

**Figure 1** is a schematic representation of a side cutaway view of a gas turbine engine 100. The gas turbine engine 100 comprises a nacelle 20 (shown in Fig. 2) that houses the engine 100. Various engine components may be susceptible to ice accretion in icing conditions, such as the spinner 40, inlet cowling of the nacelle 20, core vane 70, and the splitter assembly 50. The spinner 40 comprises spinner outer surface 42 and spinner interior surface 44.

When ice that has accreted on an engine component is shed during engine operation, the amount of ice that may be shed at any instant in time can be large enough to cause mechanical damage to downstream components (e.g., fan blade tip curl, core blade leading edge damage, or blade tip curl) or post icing acceleration surge due to the amounts and locations of ice accreted and shed. The present disclosure reduces or eliminates the potential damage and failure mechanisms by reducing the magnitude of accreted ice on engine components and by promoting differential shedding of accreted ice thus exposing downstream components to smaller amounts of ice shed at any instant in time. By reducing the magnitude of the ice shed at any particular time, the engine is less likely to experience component damage, compressor instability (surge or stall), or combustor flameout. This approach could be used for any gas turbine system that is required to operate during icing conditions.

**Figure 2** illustrates a front profile view of a gas turbine engine which utilizes an ice management system 110 according to one embodiment of the present disclosure. With reference to Fig. 2, the engine includes the nacelle 20, spinner 40, and fan blades 30. The ice management system 110 includes a de-icing promoter 120 applied to only a portion of the spinner 40 as illustrated by the shaded sections 10, whereas the other sections 15 have no de-icing promoter applied thereto. The ice management system 110 may include any one or a combination of de-icing promoters 120 such as, but not limited to, a hydrophobic coating and electrical heating elements. Each de-icing promoter 120 may be implemented using conventional techniques.

A hydrophobic coating may be applied to spinner outer surface 42 in sections 10 and used as a de-icing promoter 120. It has been discovered that the use of hydrophobic coatings as a de-icing promoter 120 only on shaded sections 10 of the spinner 40 reduces the shear force required to liberate accreted ice on the shaded sections 10, which varies the level of ice adhesion across the entire surface of the spinner 40.

Electrical heating elements may be applied to the spinner interior surface 44 in sections 10 and used as a de-icing promoter 120. These electrical heating elements may form electrical heating pads and draw electricity from the engine output.

In the case of each specific de-icing promoter 120, the sections 10 having a de-icing promoter 120 applied thereto will shed ice sooner than the sections 15, thus promoting the differential shedding of accreted ice. As sections 10 and sections 15 experience different levels of ice adhesion and thus staggered shedding of ice, the downstream components are exposed to smaller amounts of ice and are less likely to experience mechanical damage or operational instabilities.

Because the spinner 40 is a rotating component, the ice management system 110 must be provided to the spinner 40 in a differential pattern that is symmetric relative to the axis of rotation 60 of the spinner 40 in order to prevent high levels of vibration or imbalance due to uneven ice buildup with respect to the axis 60. A number of factors go into determining the number of shaded sections 10, including, but not limited to: the effective range of the de-icing promoter 120, the manufacturing tolerances of the de-icing promoter 120, and the cost of applying the de-icing promoter 120. For instance, an electrical heating element with an effective range greater than or equal to the distance across section 15 would be ineffective for the purpose of promoting differential shedding. Similarly, if the electrical heating element tolerance is greater than or equal to the spacing between sections 10, there may not be enough spacing between heated sections to accomplish differential ice shedding. With regard to application costs, it is significantly easier, less time-intensive, and therefore cheaper, to apply a de-icing promoter to a few larger regions as opposed to a greater number of smaller regions. The number of shaded sections 10 may vary, but it is generally advantageous to have the fewest shaded sections 10 that would still enable a reduction in the magnitude of ice shed, where the magnitude is less than the minimum size that would cause performance degrading damage to downstream engine components. A small number of shaded sections 10 would minimize application costs, weight, and complexity of the ice management system 110 while promoting manufacturability. The ice management system 110 pattern shown in Figure 2 or alternative patterns may be applied to other rotating components in gas turbine engine 100 such as fan blades or compressor blades.

**Figure 3** is a schematic representation of a front profile view of a splitter assembly 50 that utilizes an ice management system 110. The splitter assembly 50 is used to divide the core and bypass airflow within the engine. The splitter assembly 50 includes splitter outer surface 52 and splitter interior surface 54. As Figure 3 is a front profile view, splitter interior surface 54 lies underneath splitter outer surface 52. The ice management system 110 includes a de-icing promoter 120 applied to only a portion of the splitter assembly 50 as illustrated by the shaded sections 10, whereas the other sections 15 have no de-icing promoter applied thereto. The ice management system 110 may include any one or a combination of de-icing promoters 120 such as a hydrophobic coating, electrical heating elements, and a hot air system. Each de-icing promoter 120 may be implemented using conventional techniques as described above. A hot air system may provide surface heating to stationary components such as the splitter 50 by drawing hot air bled off the engine. This hot air may be ducted through pressure regulating valves to the stationary components in sections 10 and used as a de-icing promoter 120.

It has been observed that without the ice management system 110, gas turbine engine 100 experienced a surge due to a large amount of ice accreting on the splitter assembly 50 and shedding all at once into the engine core. However, when ice was differentially shed from the splitter assembly 50 in segments, the gas turbine engine 100 did not experience a surge. Therefore, this invention proposes to apply a de-icing promoter 120 to shaded sections 10 in a differential pattern to promote early, frequent, and differential shedding of accreted ice formations. This will protect the engine core and other downstream components from mechanical damage and operational instabilities. In the case of each specific de-icing promoter 120, the shaded sections 10 having a de-icing promoter 120 applied thereto will shed ice sooner than the sections 15, thus promoting the differential shedding of accreted ice. As sections 10 and sections 15 experience different levels of ice adhesion and thus staggered shedding of ice, the downstream components are exposed to smaller amounts of ice and are less likely to experience mechanical damage or operational instabilities.

Because the splitter assembly 50 is a stationary component, the ice management system 110 may be provided to portions in a differential pattern that is symmetric or asymmetric relative to the axis of rotation 60 of the gas turbine engine. The ice management system 110 pattern shown in Figure 3 may be applied to other stationary components (such as the cowling, core vanes, struts, or inlet guide vanes) in gas turbine engine 100 as well. While not specifically illustrated in this figure, alternative patterns of the ice management system 110 may be used.

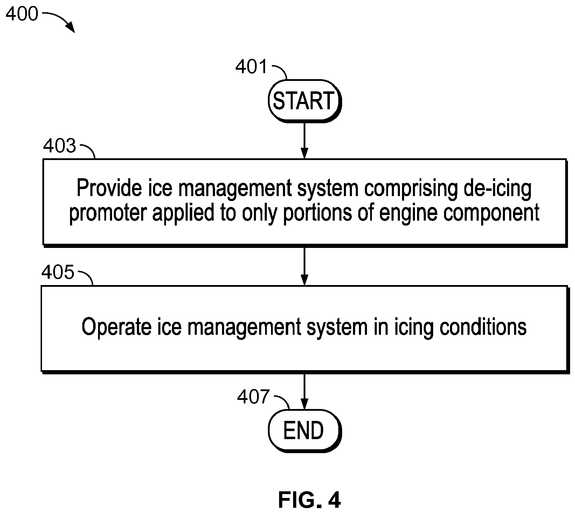

In addition to the systems of ice management described above, the present disclosure provides methods for managing ice accretion on a gas turbine engine component. **Figure 4** is a flow diagram of such a method. Method 400 begins at Block 401.

At Block 403, an ice management system is provided. The ice management system may comprise a de-icing promoter applied to only portions of an engine component. The de-icing promoter may be applied as shown in Figures 2 and 3. The de-icing promoter may be implemented as a hydrophobic coating, electrical heating elements, or a hot air system as described above.

At Block 405, the ice management system is operated in icing conditions.

The method 400 ends at Block 407.

The systems and method of ice management as described above have numerous advantages over existing engine components and methods of operation. These advantages include increased safety, reduced support costs, improved public image, and reduced certification threat.

The subject-matter of the disclosure may also relate, among others, to the following aspects:
1. A method for managing ice accretion on gas turbine engine components, the method comprising:
   providing an ice management system comprising a de-icing promoter applied to only portions of a gas turbine engine component; and
   operating the ice management system in icing conditions to promote the shedding of ice accreted on the gas turbine engine component on those portions where the de-icing promoter is applied.
2. The method of Aspect 1 wherein the de-icing promoter comprises a hydrophobic coating.
3. The method of Aspect 1 wherein the de-icing promoter comprises electrical heating elements.
4. The method of Aspect 1 wherein the de-icing promoter comprises a hot air system.
5. The method of Aspect 1 wherein the engine component is a rotating component and wherein the de-icing promoter is provided in portions that are symmetric relative to the axis of rotation of the component.
6. The method of Aspect 5 wherein the engine component is a spinner, fan, or compressor blade.
7. The method of Aspect 1 wherein the engine component is a non-rotating component.
8. The method of Aspect 7 wherein the engine component is a splitter assembly, strut, core vane, or inlet lip.
9. The method of Aspect 7 wherein the de-icing promoter is provided in portions that are symmetric relative to the axis of rotation of the gas turbine engine.
10. A gas turbine engine ice management system comprising:
   a de-icing promoter configured to manage ice accretion on a selected engine component;
   an engine component comprising a surface member, said surface member having portions with said de-icing promoter applied thereto and having portions with no de-icing promoter applied thereto.
11. The gas turbine engine ice management system of Aspect 10 wherein said de-icing promoter comprises a hydrophobic coating.
12. The gas turbine engine ice management system of Aspect 10 wherein said de-icing promoter comprises electrical heating elements.
13. The gas turbine engine ice management system of Aspect 10 wherein said de-icing promoter comprises a hot air system.
14. The gas turbine engine ice management system of Aspect 10 wherein said engine component is a rotating component and wherein said de-icing promoter is applied to portions that are positioned symmetrically about the axis of rotation of said engine component.
15. The gas turbine engine ice management system of Aspect 14 wherein the size of said portions with said de-icing promoter applied thereto is equal to the size of said portions with no de-icing promoter applied thereto.
16. The gas turbine engine ice management system of Aspect 14 wherein said engine component is a spinner, fan, or compressor blade.
17. The gas turbine engine ice management system of Aspect 10 wherein said engine component is a non-rotating component.
18. The gas turbine engine ice management system of Aspect 17 wherein said engine component is a splitter assembly, strut, core vane, or inlet lip.
19. The gas turbine engine ice management system of Aspect 17 wherein the de-icing promoter is applied to portions that are symmetric relative to the axis of rotation of the gas turbine engine.
20. The gas turbine engine ice management system of Aspect 17 wherein the de-icing promoter is applied to portions that are asymmetric relative to the axis of rotation of the gas turbine engine.

Although examples are illustrated and described herein, embodiments are nevertheless not limited to the details shown, since various modifications and structural changes may be made therein by those of ordinary skill within the scope of the claims.

## Claims

1. A method for managing ice accretion on gas turbine engine components, the method comprising the steps of:
providing an ice management system (110) comprising a de-icing promoter (120) applied to only portions of a gas turbine engine component; and
operating the ice management system (110) in icing conditions to promote the shedding of ice accreted on the gas turbine engine component on those portions where the de-icing promoter (120) is applied.

2. The method of Claim 1 wherein the de-icing promoter (120) comprises a hydrophobic coating, electrical heating elements, and/or a hot air system.

3. The method of Claim 1 or 2 wherein the engine component is a rotating component and the de-icing promoter (120) is provided in portions that are symmetric relative to the axis of rotation (60) of the component.

4. The method of Claim 1 or 2 wherein the engine component is a non-rotating component and the de-icing promoter (120) is provided in portions that are symmetric relative to the axis of rotation(60) of the gas turbine engine (100).

5. The method of any preceding Claim wherein the engine component is a rotating component that is a spinner (40), a fan blade (30), or a compressor blade, or the engine component is a non-rotating component that is a splitter assembly (50), a strut, a core vane (70), or an inlet lip.

6. A gas turbine engine ice management system (110) comprising:
a de-icing promoter(120) configured to manage ice accretion on a selected engine component; and
an engine component comprising a surface member, said surface member having portions with said de-icing promoter (120) applied thereto and having portions with no de-icing promoter applied thereto.

7. The gas turbine engine ice management system of Claim 6 wherein said de-icing promoter (120) comprises a hydrophobic coating, electrical heating elements, and/or a hot air system.

8. The gas turbine engine ice management system of Claim 6 or 7 wherein said engine component is a rotating component and said de-icing promoter (120) is applied to portions that are positioned symmetrically about the axis of rotation (60) of said engine component.

9. The gas turbine engine ice management system of Claim 8 wherein the size of said portions with said de-icing promoter (120) applied thereto is equal to the size of said portions with no de-icing promoter applied thereto.

10. The gas turbine engine ice management system of Claim 8 or 9 wherein said engine component is a spinner (40), a fan blade (30), or a compressor blade.

11. The gas turbine engine ice management system of Claim 6 or 7 wherein said engine component is a non-rotating component.

12. The gas turbine engine ice management system of Claim 11 wherein said engine component is a splitter assembly (50), a strut, a core vane (70), or an inlet lip.

13. The gas turbine engine ice management system of Claim 11 or 12 wherein the de-icing promoter (120) is applied to portions that are symmetric relative to the axis of rotation (60) of the gas turbine engine (100).

14. The gas turbine engine ice management system of Claim 11 or 12 wherein the de-icing promoter (120) is applied to portions that are asymmetric relative to the axis of rotation (60) of the gas turbine engine (100).

15. A gas turbine engine (100) comprising a gas turbine engine ice management system (110) according to any one of Claims 6 to 14.
